# EUROPEAN PATENT APPLICATION

(11) **EP 3 508 987 A1**
(43) Date of publication of application: **10.07.2019**
(21) Application number: 18201482.9
(22) Date of filing: 19.10.2018
(51) Int. Cl.: G06F 16/906

(54) **METHOD OF CONFIGURING AN INFORMATION CAPTURING DEVICE**

(30) Priority: 03.01.2018 US 201862613316 P
(71) Applicant: Getac Technology Corporation, Taipei City 11568 (TW)
(72) Inventor: WU, Chia-Chuan, 11568 Taipei City (TW)
(74) Representative: Viering, Jentschura & Partner mbB Patent- und Rechtsanwälte

(57) **Abstract**

A method of configuring an information capturing device includes the steps of:
receiving a configuration value, the configuration value being a positive integer;
setting a number of event classifications to the configuration value so as to create a plurality of event marks; receiving classification definitions of each of the event classifications; creating an event classification list according to the event marks and the classification definitions; and outputting the event classification list to an information capturing device.

## Description

### BACKGROUND OF THE INVENTION

### FIELD OF THE INVENTION

The present disclosure relates to technology of controlling information capturing devices and, more particularly, to a method of configuring an information capturing device.

### DESCRIPTION OF THE PRIOR ART

In general, portable information capturing devices capture ambient media data, such as images and sounds, at any time. Owing to increasing security awareness among the public, portable information capturing devices, easy to carry and capable of capturing information instantly, function as security auxiliary devices and are widely applied to various fields. For instance, police officers on duty carry portable information capturing devices to facilitate policing. Furthermore, medium data recorded on the portable information capturing device is useful to parties in dispute in giving evidence in a court of law or an official enquiry.

In view of the enormous amount of medium data captured and the need to enhance the ease of users' management of the medium data stored in the information capturing devices, the information capturing devices usually come with built-in basic data classification modes whereby the users mark captured data on a preliminary basis.

### SUMMARY OF THE INVENTION

However, the built-in basic data classification modes of information capturing devices seldom work with every usage scenario and thus they bring inconvenience to users, not to mention that various information capturing devices must be custom-made to the detriment of cost control.

In view of this, the present disclosure provides a method of configuring an information capturing device to allow the users to change settings of a data capturing device as needed, so as to meet different usage needs.

In an embodiment, a method of connecting to an information capturing device includes the steps of: receiving a configuration value, which is a positive integer; setting the number of event classification to the configuration value so as to create a plurality of event marks; receiving classification definitions of each of the event classifications in the aforesaid specified number; creating an event classification list according to the event marks and the classification definitions; and outputting the event classification list to an information capturing device, so as to configure event classification options of the information capturing device.

In another embodiment, a method of configuring an information capturing device includes the steps of: receiving an event classification list, the event classification list having a plurality of event marks and classification definitions indicated by the event marks; creating a plurality of options for a user interface according to the event classification list received, the options correlating with the event marks, respectively; receiving a selection command sent from the user interface and directed at one of the options; executing an information capturing process so as to create a record information; and annotating, according to the selection command, the record information with the event marks corresponding to the selection item selected.

In another embodiment, a method of configuring an information capturing device includes the steps of: receiving a first event classification list, the first event classification list having a plurality of first event marks; substituting the first event classification list for a second event classification list, the second event classification list having a plurality of second event marks, the second event marks being in a number different from the first event marks; and providing, by the user interface, options for the first event marks according to the first event classification list.

In another embodiment, a method of configuring an information capturing device includes the steps of: receiving a first event classification list, the first event classification list having a plurality of first event marks; substituting the first event classification list for a second event classification list, the second event classification list having a plurality of second event marks, the second event marks being different from at least a first event mark; and providing, by the user interface, options for the first event marks according to the first event classification list.

In conclusion, a method of configuring an information capturing device according to an embodiment of the present disclosure involves creating an event classification list to meet user needs such that the information capturing device can set new event classification options, and in consequence data captured by the information capturing device can be classified more easily. Another method of configuring an information capturing device according to an embodiment of the present disclosure involves setting different numbers of event classification options to meet user needs such that data captured by the information capturing device can be classified. Yet another method of configuring an information capturing device according to an embodiment of the present disclosure is effective in setting different numbers of event classification options or new event classification options of the information capturing device at any time and in an unlimited number of instances, so as to meet user needs. Still yet another method of configuring an information capturing device according to an embodiment of the present disclosure allows the information capturing device to provide suitable prompts and thus enhance the users' comprehension of the new event classification options

### BRIEF DESCRIPTION OF THE DRAWINGS

FIG. 1 is a schematic view of a configuration system according to an embodiment of the present disclosure;
FIG. 2 is a block diagram of a host of the configuration system according to an embodiment of the present disclosure;
FIG. 3 is a schematic view of the process flow of a method of configuring an information capturing device according to an embodiment of the present disclosure;
FIG. 4 is a schematic view of the process flow of a method of configuring an information capturing device according to an embodiment of the present disclosure;
FIG. 5 is a block diagram of an information capturing device of the configuration system according to an embodiment of the present disclosure;
FIG. 6 is a schematic view of the process flow of a method of configuring an information capturing device according to an embodiment of the present disclosure;
FIG. 7 is a schematic view of the process flow of a method of configuring an information capturing device according to an embodiment of the present disclosure;
FIG. 8 is a perspective schematic view of the information capturing device of the configuration system according to an embodiment of the present disclosure;
FIG. 9 is a schematic view of a portion of the process flow of a method of configuring an information capturing device according to an embodiment of the present disclosure; and
FIG. 10 is a schematic view of the process flow of a method of configuring an information capturing device according to an embodiment of the present disclosure.

### DETAILED DESCRIPTION OF THE EMBODIMENTS

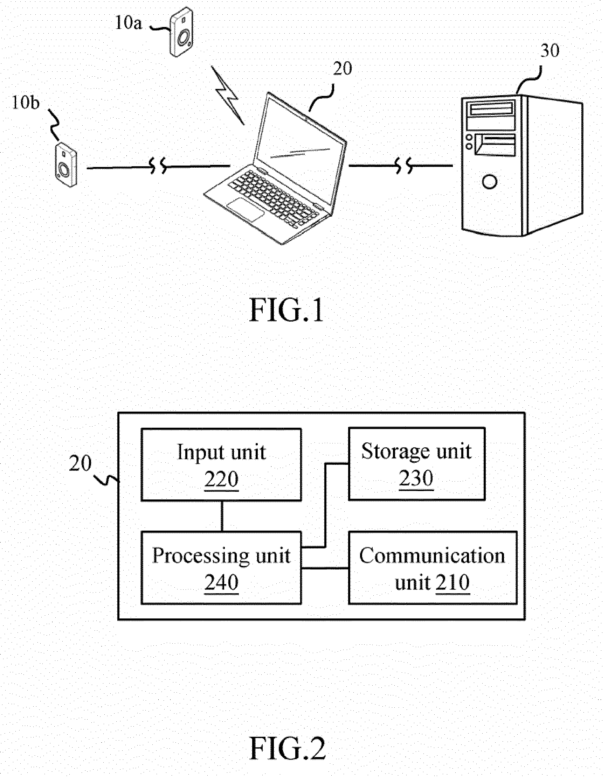

FIG. 1 is a schematic view of a configuration system according to an embodiment of the present disclosure. Referring to FIG. 1, the configuration system includes at least an information capturing device 10a∼10b and a host 20. The host 20 is connected to the at least an information capturing device 10a∼10b by a wired or wireless connection to achieve mutual communication. For instance, the connection is implemented by a Universal Serial Bus (USB), Bluetooth communication, infrared communication, WIFI communication, 3G communication or 4G communication. The host 20 is connected to at least one of the information capturing devices 10a∼10b or to the information capturing devices 10a∼10b, so as to configure a data capturing device.

In some embodiments, the information capturing devices 10a∼10b are multimedia capturing devices, such as body-worn cameras, IP cameras, walkmans, pen recorders or dashcams. The host 20 is an electronic device capable of network connection, such as cellular phone, tablet, personal computer, laptop or server, but the present disclosure is not limited thereto.

FIG. 2 is a block diagram of a host of the configuration system according to an embodiment of the present disclosure. Referring to FIG. 2, in some embodiments, the host 20 includes a communication unit 210, a storage unit 230, an input unit 220 and a processing unit 240. The processing unit 240 is coupled to the communication unit 210, the storage unit 230 and the input unit 220.

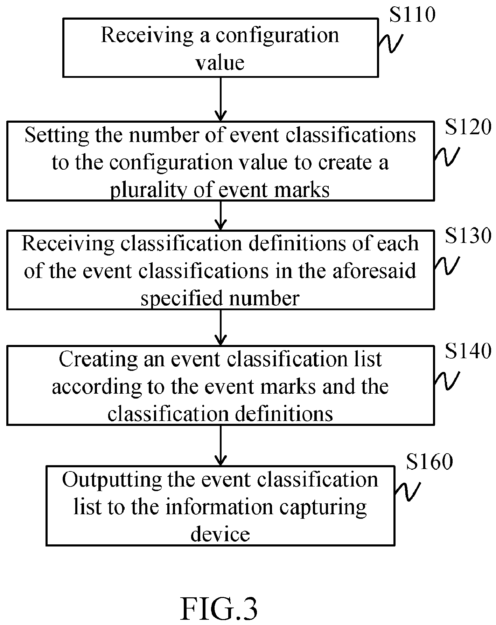

FIG. 3 is a schematic view of the process flow of a method of configuring an information capturing device according to an embodiment of the present disclosure. Referring to FIG. 1 through FIG. 3, as soon as the host 20 is connected to one of the information capturing devices 10a∼10b (for example, the information capturing device 10a), the host 20 configures the information capturing device 10a. The input unit 220 of the host 20 receives a configuration value in the course of the configuring process (step S110). The configuration value is a positive integer. In some embodiments, the input unit 220 is a touchscreen, a voice input, a keyboard, or a combination thereof.

After step S110, the processing unit 240 sets the number of event classifications to the configuration value to create a plurality of event marks (step S120). The event marks are numerals, Chinese and/or English text, other symbols, or a combination thereof. For instance, given a configuration value of 3, the processing unit 240 creates three event marks at level one, level two and level three, respectively.

Afterward, the input unit 220 receives classification definitions of each of the event classifications in the aforesaid specified number (step S130). Therefore, each event mark has a dedicated classification definition to render future classification easier. In some embodiments, the classification definition is a sign, a code or a text. For instance, the classification definition corresponding to level one is indicative of a murder event, the classification definition corresponding to level two is indicative of a robbery event, and the classification definition corresponding to level three is indicative of a traffic accident event.

The processing unit 240 creates an event classification list according to the event marks and the classification definitions (step S140). Therefore, the event classification list at least includes the event marks in the same number as the configuration value and the classification definitions corresponding to the event marks, respectively. In some embodiments, the processing unit 240 stores the event classification list created in the storage unit 230. Therefore, given a configuration value of 3, the event classification list is shown in Table 1. ∘

**Table 1**

| level | classification definition |
|---|---|
| 1 | murder event |
| 2 | robbery event |
| 3 | traffic accident event |

After the event classification list has been created, the communication unit 210 outputs the event classification list to the information capturing device 10a (step S160), so as to configure the information capturing device 10a.

In an embodiment, the host 20 gets connected to the information capturing device 10a whose event options are to be updated. Afterward, the host 20 executes steps S110 ∼ S160. In another embodiment, after executing steps S110 ∼ S140, the host 20 gets connected to the information capturing device 10a whose event options are to be updated, and then the host 20 executes step S160 so as to send the created event classification list to the information capturing device 10a. In some embodiments, the storage unit 230 stores therein a plurality of event classification lists varying in contents and output to different information capturing devices as needed, respectively. For instance, the host 20 creates an event classification list exclusive to first-group members and an event classification list exclusive to second-group members according to steps S110 ∼ S140. When the first-group members collect the information capturing device, the event classification list exclusive to the first-group members is output to the information capturing device. When the second-group members collect the information capturing device, the event classification list exclusive to the second-group members is output to the information capturing device.

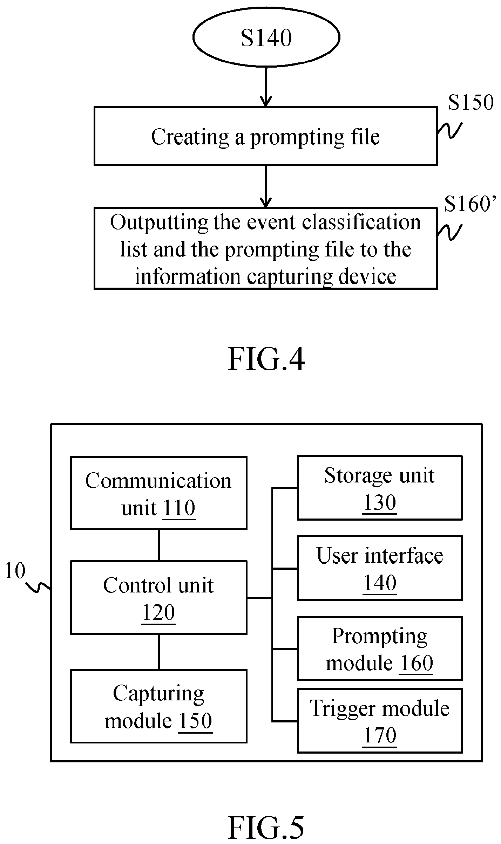

FIG. 4 is a schematic view of the process flow of a method of configuring an information capturing device according to an embodiment of the present disclosure. Referring to FIG. 4, in some embodiments, the processing unit 240 not only creates an event classification list but also creates a prompting file corresponding to the event classification list (step S150). The prompting files correspond to the event marks and each have a prompt for the classification definition of the corresponding event mark; hence, the prompt for the corresponding classification definition is output whenever the event marks are swapped, so as to inform users of the classification definition of the current event mark. In some embodiments, a single prompting file corresponds to a single event classification list and includes the prompts for all the classification definitions on the corresponding event classification list. For instance, when the event classification list has three event marks, the prompting file has three prompts. In some embodiments, a single prompting file corresponds to a plurality of event classification lists, and the prompting file at least includes the prompts for all the classification definitions on the plurality of event classification lists. For instance, when event classification list A has a and b event marks, event classification list B has c and d event marks, such that the prompting file includes a-d prompts, that is, four prompts; hence, the prompting file is applicable to event classification list A and applicable to event classification list B. In some embodiments, the prompts are each a voice message, a text message or an operation command (for example, one for controlling the number of times a display light flashes.) After step S150, the communication unit 210 outputs the event classification list and the prompting file to the information capturing device (step S160').

The aforesaid order of the steps is not restrictive of the present disclosure. Persons skilled in the art understand that under reasonable circumstances some of the steps may be executed simultaneously or executed in reverse order.

In some embodiments, the processing unit 240 of the host 20 executes a firmware or software algorithm stored in the storage unit 230 to implement a method of configuring an information capturing device according to an embodiment of the present disclosure. The firmware or software algorithm is implemented as a plurality of computer program commands. In some embodiments, the plurality of computer program commands is stored in a computer program product. In some embodiments, the computer program product is a readable record medium loadable and executable by the host 20. In some embodiments, the computer program product is a mobile application (mobile app or app for short) downloadable and executable by the host 20. In some embodiments, the computer program command per se is a computer program product and is transmitted in a wired or wireless manner to the host 20 (so as to be stored in the storage unit 230.)

Referring to FIG. 1, in some embodiments, the configuration system further includes a server 30. The server 30 and the host 20 are connected in a wired or wireless manner to enable mutual communication therebetween. In an embodiment, step S110 through step S140 are performed by the server 30, whereas step S160 is performed after the host 20 has received the event classification list from the server 30. In another embodiment, after the host 20 has executed step S110, the configuration value is sent to the server 30. Afterward, the server 30 executes step S120 through step S140 according to the configuration value so as to create an event classification list and send the event classification list to the host 20. Step S160 is performed after the host 20 has received the event classification list from the server 30.

FIG. 5 is a block diagram of an information capturing device of the configuration system according to an embodiment of the present disclosure. Referring to FIG. 5, in some embodiments, the information capturing device 10 includes a communication unit 110, a control unit 120, a storage unit 130, a user interface 140, a prompting module 160 and a capturing module 150. The control unit 120 is coupled to the communication unit 110, the storage unit 130, the user interface 140, the prompting module 160 and the capturing module 150.

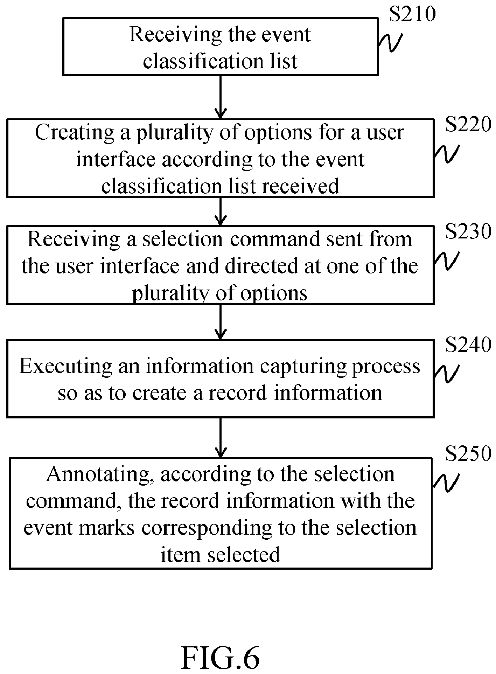

FIG. 6 is a schematic view of the process flow of a method of configuring an information capturing device according to an embodiment of the present disclosure. Referring to FIGS. 1, 5 and FIG. 6, in order to configure any one of the information capturing devices 10a∼10b, the communication unit 110 of the information capturing device 10 receives the event classification list (step S210). The event classification list has a plurality of event marks and classification definitions indicated by the event marks.

Upon receipt of the event classification list, the control unit 120 creates a plurality of options for the user interface 140 according to the event classification list received (step S220). Therefore, the user interface 140 provides, according to the event classification list, a plurality of options for a user to choose from. Hence, after step S220, the user can choose from a plurality of options, using the user interface 140.

After creating the plurality of options, the control unit 120 receives a selection command sent from the user interface 140 and directed at one of the plurality of options (step S230). Therefore, the user interface 140 creates a selection command corresponding to an option, after the user interface 140 has received the option selected by the user. Hence, the selection command specifies an event mark. The user interface 140 is implemented as a touchscreen, voice commands, movement detection, facial recognition, a turntable, switches or buttons.

The information capturing device 10 executes an information capturing process so as to create a record information (step S240). In some embodiments, the information capturing process involves starting the capturing module 150 in order to begin capturing ambient messages from the surroundings, and, after its shutdown, the capturing module 150 turns the ambient messages captured in the duration from start to shutdown into the record information. In an exemplary embodiment, the capturing module 150 is implemented as a camera lens and an image signal processing unit. In another exemplary embodiment, the capturing module 150 is implemented as a camera lens, a microphone, and an image signal processing unit. In some exemplary embodiments, the record information is image information, audio information, thermal sensing information or video information.

In some embodiments, the beginning and ending of the capturing process are triggered by the user interface 140. In some embodiments, the beginning and ending of the capturing process are triggered by a trigger module 170.

The aforesaid order of the steps is not restrictive of the present disclosure. Persons skilled in the art understand that under reasonable circumstances some of the steps may be executed simultaneously or executed in reverse order. For instance, in some embodiments, the starting of the information capturing process and the receiving of a selection command occur synchronously. In some other embodiments, the starting of the information capturing process and the receiving of a selection command do not occur synchronously. In yet some other embodiments, a selection command is received only after the information capturing process has ended. Therefore, step S140 may precede or follow steps S110 ∼ S130.

Afterward, the control unit 120 annotates, according to the selection command, the record information with the event marks corresponding to the selection item selected (step S250). In some embodiments of step S250, the control unit 120 stores the record information annotated with the event marks in the storage unit 130. In some embodiments of step S250, the control unit 120 sends through the communication unit 110 the record information annotated with the event marks to another effective device (for example, a server, trigger box, notebook computer or smartphone).

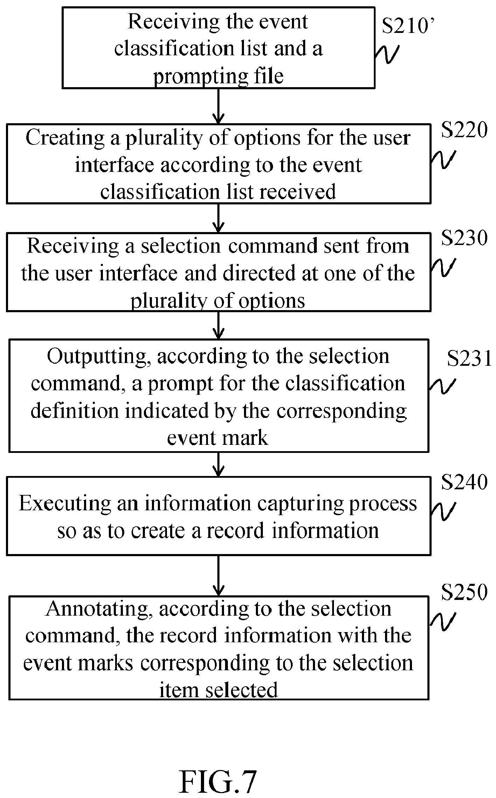

FIG. 7 is a schematic view of the process flow of a method of configuring an information capturing device according to an embodiment of the present disclosure. Referring to FIG. 7, in some embodiments, upon receipt of the event classification list, the communication unit 110 also receives a prompting file corresponding to the event classification list (step S210'). The prompting file corresponding to the event classification list has the prompts for the classification definitions of all the event marks on the event classification list.

Upon receipt of the selection command (step S230), the prompting module 160 outputs, according to the selection command, a prompt for the classification definition indicated by the event mark corresponding to the prompting file (step S231). For instance, if the prompt is a voice message, the prompting module 160 is implemented as a speaker. If the prompt is a text message, the prompting module 160 is implemented as a display unit. If the prompt is an operation command, the prompting module 160 is implemented as a display light. For instance, if level two is selected, the operation command instructs the display light to flash twice.

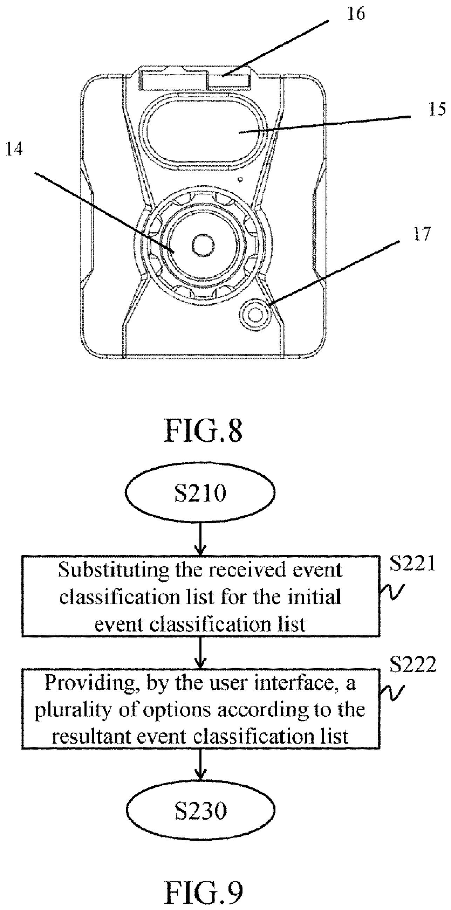

FIG. 8 is a perspective schematic view of the information capturing device of the configuration system according to an embodiment of the present disclosure. For instance, for the sake of downsizing and flexible control, the user interface 140 is implemented by a wheel-based control technique. As shown in FIG. 8, the information capturing device 10 has a wheel 14, a camera lens 15, a display light 16 and a button 17 (*i.e,* the trigger module 170). Take the process flow of the operation of the information capturing device 10 as an example, a police officer follows steps S210 ∼ S220 to create a plurality of options for the wheel 14, with level one indicative of a classification definition of a murder event, level two indicative of a classification definition of a robbery event, and level three indicative of a classification definition of a traffic accident event. If, in response to a robbery report filed by phone, the police officer rushes to the crime scene and presses the button 17 to generate a trigger signal, the control unit 120 will respond to the trigger signal by causing the capturing module 150 to begin carrying out the information capturing process, for example, causing the camera lens 15 to begin taking pictures. Before s/he stops taking pictures, the police officer rotates the wheel 14 to 15 degrees to select the selection command of level one and thus cause the display light 16 to flash once. Afterward, the police officer rotates the wheel 14 to 30 degrees to select the selection command of level two and thus cause the display light 16 to flash twice, thereby finalizing the operation of the selection command. Finally (*i.e.,* upon completion of the on-site investigation into the robbery), the police officer presses the button 17 to stop taking pictures and create a piece of video data (*i.e.,* a record information), whereas the control unit 120 marks the robbery event on the video information.

FIG. 9 is a schematic view of a portion of the process flow of a method of configuring an information capturing device according to an embodiment of the present disclosure. In some embodiments, upon receipt of the event classification list, the received event classification list substitutes for the initial event classification list (step S221), so as to change the settings of the information capturing device 10. The number of the event marks of the received event classification list differs from the number of the event marks of the initial event classification list.

After the received event classification list has substituted for the initial event classification list, the user interface 140 provides a plurality of options according to the resultant event classification list (step S222). Since the number of the event marks of the received event classification list differs from the number of the event marks of the initial event classification list, the number of the current options differs from the number of the initial options. For instance, the initial information capturing device has the event classification list exclusive to the first-group members; hence, when the information capturing device is handed over to the second-group members, the event classification list exclusive to the second-group members substitutes for the event classification list exclusive to the first-group members, so as to increase the utilization rate of the information capturing device. In some embodiments, step S222 is implemented as an overloading process. The overloading process entails restarting the information capturing device 10, loading its execution programs, and updating the execution programs.

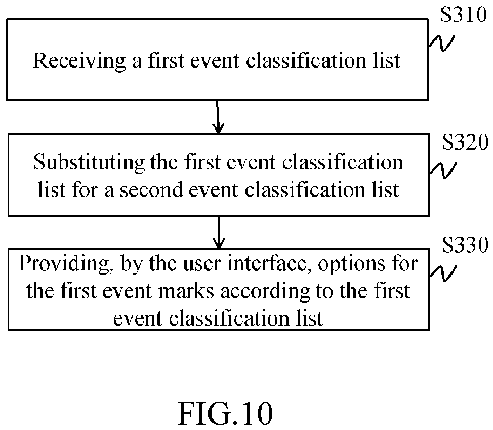

FIG. 10 is a schematic view of the process flow of a method of configuring an information capturing device according to an embodiment of the present disclosure. In some embodiments, the information capturing device 10 receives a first event classification list (step S310). The first event classification list has a plurality of first event marks. Then, the information capturing device 10 substitutes the first event classification list for the current event classification list, that is, a second event classification list (step S320). The second event classification list has a plurality of second event marks. Upon completion of the substitution (step S320), the event classification list currently used by the information capturing device 10 turns into the first event classification list. Afterward, the user interface 140 provides the options for the first event marks according to the first event classification list respectively (step S330).

In an embodiment, the number of the first event marks differs from the number of the second event marks. Therefore, the first event classification list differs from the second event classification list in the number of event marks. Therefore, after the information capturing device 10 has been configured by the above-mentioned method of configuring an information capturing device, the user interface 140 provides the options which differ from the pre-configuration options in quantity.

In another embodiment, at least one first event mark is different from all the second event marks; hence, the first event classification list has the first event marks whose classification definitions are different from the classification definitions of all the second event marks. Therefore, after the information capturing device 10 has been configured by the aforesaid method of configuring an information capturing device, the user interface 140 provides the event marks whose classification definitions are different from the classification definitions of the pre-configuration event marks.

In some embodiments, the processing unit 240 is implemented as one or more processing components, whereas the control unit 120 is implemented as one or more processing components. The processing components are each an SoC (System on a Chip), a central processing unit (CPU) or a microprocessor (MCU), but the present disclosure is not limited thereto. In some embodiments, all the control components (for example, the control unit 120, and a processing unit of a capturing module 150) in each information capturing device 10 are integrated into a single processing chip.

In some embodiments, the storage units 230, 130 are each implemented as one or more storage components. Each storage component is a nonvolatile memory (such as read-only memory (ROM) or flash memory) or a volatile memory (such as random-access memory (RAM)).

In conclusion, a method of configuring an information capturing device according to an embodiment of the present disclosure allows the information capturing device to provide a wide variety of marks by a simple process flow of configuration such that a record information obtained by the information capturing device can be appropriately marked. The method of configuring an information capturing device according to an embodiment of the present disclosure allows the information capturing device to change repeatedly the total number of the options provided. The method of configuring an information capturing device according to an embodiment of the present disclosure allows the information capturing device to change repeatedly the contents of the options provided. The method of configuring an information capturing device according to an embodiment of the present disclosure allows the information capturing device to provide prompts for the contents of the options and thus renders user selection easier. The method of configuring an information capturing device according to an embodiment of the present disclosure not only has ease of use but is also effective in reconfiguring the information capturing device without any additional, special hardware equipment.

The above preferred embodiments are illustrative of the technical features of the present disclosure rather than restrictive of the present disclosure. Persons skilled in the art may change and modify the above preferred embodiments without departing from the spirit of the present disclosure. Therefore, the scope of the protection of rights of the present disclosure shall be defined by the appended claims.

## Claims

1. A method of configuring an information capturing device, comprising the steps of:
receiving a configuration value, the configuration value being a positive integer;
setting a number of event classifications to the configuration value so as to create a plurality of event marks, wherein the number of the event marks is equal to the configuration value;
receiving a plurality of classification definitions in the number of the event marks;
creating an event classification list according to the event marks and the classification definitions; and
outputting the event classification list to an information capturing device, so as to configure event classification options of the information capturing device.

2. The method of claim 1, further comprising the steps of:
creating a prompting file corresponding to the event marks, wherein the prompting file has a prompt for the classification definition corresponding to the event mark; and
outputting the prompting files to the information capturing device.

3. A method of configuring an information capturing device, comprising the steps of:
receiving an event classification list, the event classification list having a plurality of event marks and classification definitions indicated by the event marks;
creating a plurality of options for a user interface according to the event classification list received, the options correlating with the event marks, respectively;
receiving a selection command sent from the user interface and directed at one of the options;
executing an information capturing process so as to create a record information; and
annotating, according to the selection command, the record information with the event marks corresponding to the selection item selected.

4. The method of claim 3, further comprising the steps of:
receiving a prompting file corresponding to the event classification list, the prompting file having prompts for the classification definitions; and
outputting, according to the selection command, the prompt for the classification definition indicated by the corresponding event mark.

5. The method of claim 3, wherein the prompt is a voice message, a text message or an operation command.

6. The method of claim 3, wherein the step of creating the options for the user interface according to the event classification list received comprises the sub-steps of:
substituting the received event classification list for an initial event classification list, wherein the number of the event marks on the received event classification list is not equal to the number of the event marks on the initial event classification list; and
providing, by the user interface, the options according to the resultant event classification list.

7. The method of claim 6, wherein the step of providing, by the user interface, the options according to the resultant event classification list is implemented by an overloading process.

8. A method of configuring an information capturing device, comprising the steps of:
receiving a first event classification list, the first event classification list having a plurality of first event marks;
substituting the first event classification list for a second event classification list, the second event classification list having a plurality of second event marks, the second event marks being in a number different from the first event marks; and
providing, by the user interface, options for the first event marks according to the first event classification list.

9. The method of claim 8, wherein the step of providing, by the user interface, the options for the first event marks according to the first event classification list is implemented by an overloading process.

10. A method of configuring an information capturing device, comprising the steps of:
receiving a first event classification list, the first event classification list having a plurality of first event marks;
substituting the first event classification list for a second event classification list, the second event classification list having a plurality of second event marks, the second event marks being different from at least a first event mark; and
providing, by the user interface, options for the first event marks according to the first event classification list.
